(19)

Europäisches
Patentamt
European
Patent Office
Office européen
des brevets

(11)     **EP 1 533 275 B1**

(12)                    **EUROPEAN PATENT SPECIFICATION**

(45) Date of publication and mention
of the grant of the patent:
**26.08.2009  Bulletin 2009/35**

(51) Int Cl.:
*C02F 1/28* *(2006.01)*          *C02F 1/52* *(2006.01)*
*C02F 3/12* *(2006.01)*

(21) Application number: **04380230.5**

(22) Date of filing: **19.11.2004**

(54) **Ecological composition for treating and purifying waste water**

Zusammensetzung aus Ton und Dolomit zur Behandlung von Abwassern

Composition d'argile et de dolomite pour le traitement des eaux

(84) Designated Contracting States:
**AT BE BG CH CY CZ DE DK EE ES FI FR GB GR
HU IE IS IT LI LU MC NL PL PT RO SE SI SK TR**

(30) Priority: **20.11.2003  ES 200302716
18.11.2004  ES 200402775**

(43) Date of publication of application:
**25.05.2005  Bulletin 2005/21**

(73) Proprietor: **S.A. Minera Catalano-Aragonesa
50001 Zaragoza (ES)**

(72) Inventors:
• **Tolosa Cortes, Jose Ignacio
Zaragoza 50.001 (ES)**
• **Aguaviva Ladrero, Nuria Isabel
Zaragoza 50.001 (ES)**
• **Caballero Lopez, Miguel Angel
Zaragoza 50.001 (ES)**
• **Jimenez Lorenzo, Maximo
41092 Sevilla (ES)**

(74) Representative: **Schäfer, Matthias W. et al
Patentanwalt
Schwanseestrasse 43
81549 München (DE)**

(56) References cited:
**DE-A1- 3 728 812          GB-A- 2 200 350
US-A- 5 180 495           US-A- 5 643 453
US-A1- 2001 025 945      US-A1- 2002 179 534**

• **KHOURY HANI N ET AL: "ORIGIN OF
MAGNESIUM CLAYS FROM THE AMARGOSA
DESERT, NEVADA" CLAYS CLAY MINER OCT
1982, vol. 30, no. 5, October 1982 (1982-10), pages
327-336, XP9043696**

Remarks:
The file contains technical information submitted after
the application was filed and not included in this
specification

**Description**

## TECHNICAL FIELD OF THE INVENTION

The present invention fits in the field of treating and purifying waste water polluted by the presence of organic and/or inorganic pollutants. More specifically, it refers to a composition containing a natural mixture of dolomite and clays, especially useful for said processes.

## PRIOR ART OF THE INVENTION

Purification of waste water constitutes one of the fields that have undergone the greatest development in the latest years. The imposition of stricter legislation on the part of different governments, along with a greater awareness on the part of society has caused an increase in efforts to search for suitable treating and purifying systems.

There are numerous examples of industrial processes that produce effluents considered as pollutants, either due to the presence of inorganic pollutants (metals, ammonia, phosphorus), or due to the presence of organic pollutants (fats, alcohols, aromatic compounds, etc...), or due to the combination of both types of pollutants. From among all the polluting sectors, the following stand out: iron and steel industry, surface treatment, ceramics, tanning, papermaking, food processing and intensive stock-breeding.

Clays have been proposed for use in purifying treatments of waters in physicochemical treatments. This has been due to the fact that some properties that said materials have, such as the high porosity thereof, the high specific surface thereof and the high cationic exchange capacity thereof, which they have due to their property of a high absorption and adsorption capacity. The clays used have been used in percolation systems, consisting of passing the effluent to be purified though a fixed clay bed, as well as a contact bed, where the clay is added in powder form to the polluted water to be treated, with the possibility of subsequent stirring.

The clays studied have been studied both naturally as well as in a modified form. Said modifications have sought to vary some of the properties of the clay, for the purpose of obtaining goods for specific problems. Hence, treating clays with inorganic acids causes the cleaning of the material and an increase of porosity and of the specific surface. It also achieves an increase of porosity with heat treatment of clays. Treating clays with specific organic reagents gives them hydrophobic properties, taken advantage of for selective elimination of organic pollutants.

Some examples illustrate the use of clays in processes for treating and purifying waste water by means of physicochemical properties.

- US patent 4116828 describes the elimination of pesticides, toxins, hormones, heavy metals, cations and virus by adsorption on attapulgite or sepiolite.
- US patent 5454955 describes the use of hectorite along with a water-soluble cationic coagulant for decoloring waste water of the elimination of the ink present on used paper.
- Patent application WO 96/10540 describes the purification of waste polar liquids by adding a suspension of bentonite to the polar liquid itself to be purified.
- US patent 5632899 describes the elimination of alkylthioalkylamines with the subsequent reduction of the toxic effects thereof on water by means of adding natural or synthetic swellable clays.
- RU patent 2125022 describes a composition for treating waste water obtained by mixing unslaked lime with clays (mica, montmorillonite, palygorskite) along with additives such as kaolin, bentonite, beidellite,.... The clays are dried and treated with ammonia. The treatment causes the metals to precipitate, and the suspended materials to coagulate and flocculate, in the presence of surface active agents.
- US patent 5880060 describes a mixture for the elimination of heavy metals and radioactive isotopes. The mixture mainly consists of bentonite, illite, aluminum sulfate and calcium hydroxide.
- EP patent 0901805/A1 describes the elimination of oily organic pollutants using modified clays as well as by acid treatment such as organophyllic clays.
- Patent application WO 01/79120 A1 describes a chemical precipitant mainly comprised of bentonite, sodium polyphosphate and lignite.
- Patent application WO 01/90000 A1 describes the use of natural or organically modified clays for eliminating toxins in water. The clays may be smectites, attapulgite, sepiolite, kaolinite, illite and mixtures thereof.
- Patent application WO 02/10075 describes a composition for neutralizing strong organic or inorganic acids. The composition is obtained by mixing carbonates, hydroxides and an adsorbent (bentonite, kaolin).
- Patent application WO 02/36497 A1 describes the treatment of aqueous compositions by adding smectite and hydrotalcite, or a mixture capable of forming a hydrotalcite type material.
- US patent 2003/0015473 A1 describes the obtainment of clays organically modified by contact with attapulgite, sepiolite, zeolite or mixtures thereof with an alkylamine base. The use of the composition in the purification of polluted liquids is also described.

It is clearly observed how the clay used the most is montmorillonite (bentonite). It is also observed that the action of the clays tends to be accompanied by a series of additives usually used in purifying waters, such as neutralizing agents, precipitants, coagulants, flocculants and decoloring agents. It can also be seen how the proposed systems are generally used for specific purifying processes. Those systems whose use is proposed for a wide range of polluted waste water are the scarcest.

Likewise, clays have been proposed for use thereof in biological purifying treatments, aerobic as well as anaerobic ones, acting as a porous support that permits the growth and fixing of bacteria that act in the purifying process. In comparison with other materials that can be used as supports (active carbon, ceramic materials, plastics) it has been proposed that traces of elements such as copper, zinc, iron, magnesium and others fixed electrostatically to the clays can be used as nutrients of bacteria.

Some examples illustrate the use of clays in processes for treating and purifying waste water by means of biological treatments:

- US patent 3935067 describes the use of sodium bentonites as support of a bacterial culture that uses a bacteria growth promoter.
- FR patent 2551048 A1 describes the use of attapulgite and sepiolite in the purification of effluents in alcohol fermentation tanks containing phototropic type bacteria.
- ES patent 2005754 describes the treatment of waste water in the presence of a clayish mineral filler in anaerobic digesters of an expanded or fluidized bed.
  Said filler may be selected from among sepiolite, smectite, vermiculite, kaolinite, haloisite, illite, or palygorskite.
- Patent application WO 94/20425 describes the use of talc, kaolin or mica in a purification process by means of activated sludge.
- EP patent 0834473 describes a biological activator for septic tanks comprised of clays together with cations in such a way that the fixing and activity of the natural enzymes of the process are increased.
- US patent 6503740 describes the use of organically modified clays as the bacteria support in the decomposition of chemical pollutants. The proposed clays are smectites, sepiolite, attapulgite, kaolinite, among others.

The purpose of the present invention refers to a composition for treating waste water by the presence of organic and/or inorganic pollutants, said composition containing a natural mixture of dolomite and clays. Some representative examples of systems containing dolomite in their composition for treating and/or purifying waste water are cited hereinafter:

- DE patent 3440619 proposes the use of calcium carbonate, magnesium carbonate, limestone or dolomite as a solid bacteria support.
- DE patent 3501563 describes the use of limestone or dolomite for controlling the pH at a suitable value for biological treatment of waste water in a combined process of mechanical, chemical and biological purification. Adding limestone or dolomite is developed in the chemical process.
- GB patent 2200350 describes the process for obtaining a filtering granular product. Said process implies adding between 20 and 25% of a dolomitic type mineral product (mixture in suitable proportions of calcium carbonate and magnesium carbonate) to a kaolin suspension. The process is completed by granulating and calcining the total resulting mixture at a temperature between 900 and 950°C.
- DE patent 4132679 describes the elimination of chrome, vanadium and titanium by adding natural dolomite, calcium and/or sodium hydroxide. The hydroxides formed are separated with the help of a coagulant.
  AT-2396101B describes a process for treating polluted waste water. Semi-calcined or calcined natural form dolomite is used as a source of MgO.
- WO99/36365 describes a flocculant comprised of up to seven components. Dolomite or zeolite in percentages between 10 and 70% of the composition appears as a clarifying agent.
- WO00/05178 describes dolomite treated at 720°C as an active component in a composition for the elimination and inertization of heavy metals and/or phosphates in polluted liquids and/or solids. Clays may be used as carriers of the composition.

WO02/20152 describes the obtaining of an adsorbent/flocculant by heat treatment of dolomite at 800°C.

It is observed how natural or synthetic dolomites subjected to calcination or semi-calcination processes before or after adding them to the other components constituting the proposed compositions are used to the most. Pointing out the use of natural dolomite has deserved up to now very limited attention, despite the fact that it is a material abundant in nature. Natural dolomite has a series of properties such as its porosity, its decoloring capacity, its reactivity in acid media acting as a source of magnesium and adjusting the pH, its reactivity with heavy metals and the like, that make them attractive in the study for treating and purifying industrial waters.

From the analysis of all the cited studies, it is inferred that the tendency followed with clays and dolomite for treating and purifying waste water is the modification (generally calcination and/or treatment with chemicals) of the corresponding natural products. This process generally makes their industrial production and/or commercial efficiency difficult. Besides, these modified products do not tend to be generally useful and they are used for very specific problems and methods. Synthetic mixtures of different components also tend to be proposed, each one of them calling for only one of the properties thereof, without evaluating the effects that the group of possibilities offered by the materials has on the use of the product and/or method. Hence, mixtures containing clays only referring to their use as binding agents or carriers have been proposed without taking into account their adsorption/absorption capacity or their use as a solid support that enhances the interaction between the pollutants to be treated and the products called for as active species in the treatment and/or purification process. Likewise, mixtures with dolomite or carbonates in general have been proposed, without indicating their possible use as a source of metal elements such as magnesium, normally used in processes for treatment and purifying waste water, or as a source of carbonate ions that enhance precipitation, flocculation or coagulation of the polluting elements present in the polluting waste water subjected to treatment and purification.

DE3728812 discloses a mineralic composition and a process for producing the same. According to this process, a Smectite clay without Sepiolite is mixed with dolomite requiring additional steps to prepare the pre-components to be able to be mixed homogeneously. The mixture is then heat treated at temperatures over 650°C.

US20010025945 deals with the use of a composition of one or more natural silicates, one or more flying ashes and/or silica fume, cement and lime for purifying waste water. These natural silicates can be natural clay. US20010025945 specifies the natural clay as being selected from bentonite, zeolites and natural phosphate rocks. Further, the composition according to US20010025945 is a synthetic mixture which is obtained by adding all ingredients one at a time and mixing them before each addition. No heat treatment is applied. The result is a free flowing solid which is added directly to the waste water for creating a slurry.

GB2200350A describes a process of mixing china clay (Kaolin) with Dolomite powder and applying a heat treatment afterwards. GB2200350A teaches to only use a temperature range between 900°C and 950°C and to only use 20% - 25% of Dolomite, explaining that amounts above or below these values will not work properly.

US20020179534 discloses the production of sintered light expanded marina clay aggregates (LECA) for phosphorus removal. US20020179534 states that the production process involves adding calcium carbonate and dolomite to clay. Further, US20020179534 describes expanding and firing the marina clay-based material wherein the clay is fed into a rotary kiln where it is fired and finally expanded at a temperature of over 1200°C to obtain a sintered material.

The article "Origin of Magnesium Clays from the Amargosa Desert, Nevada, Hani N. Hhoury et al., Clays and Minerals, Vol. 30, No. 5, 327-336, 1982", discloses a field study examining the origin of Magnesium clays from the Amargosa dessert, Nevada. In this study a natural composition comprising dolomite and clay containing smectites and sepiolites is disclosed. The report analyses different probes from different areas.

The applicant has now discovered a natural composition made of dolomite and clay that constitutes the object of the present invention and that as far as the research he has carried out has revealed, this composition has not yet been used for the purpose described herein.

## DETAILED DESCRIPTION OF THE INVENTION

As indicated in the title, the present invention refers to an ecological composition for treating and purifying waste water according to claim 1, a method of producing such composition according to claim 4 and the use of such composition according to claim 5.

Dolomite as well as the clays present in the composition, which is the object of the invention, are an active part in the use of the composition for treating and purifying polluted waste water.

The composition object of the present invention is characterized in that it is a natural mixture of dolomite and clays, in the following proportions:

|  | % (w/w) |
|---|---|
| - dolomite: | 5-40 |
| - clay: | 45-95 |

with respect to the total weight of the composition.

In turn, the clays are a mixture of smectites, illite and sepiolite, in the following proportions:

|  | % (w/w) |
| --- | --- |
| - smectites | 5-40 |
| - illite: | 0-30 |
| - sepiolite: | 5-70 |

with respect to the total weight of the composition.

The smectites are selected from the group formed by: montmorillonite, beidellite, hectorite, nontronite, saponite, stevensite and mixtures thereof.

Dolomite is a mineral present in nature, normally of a sedimentary source, whose ideal formula is $MgCa(CO_3)_2$, although the specific composition thereof depends on each specific deposit.

Mineralogically, a specific group of phyllosilicates is called clay. The structure of these phyllosilicates is based on the stacking oxygen and hydroxyl ion planes. Tetrahedral groups of $SiO_4^{4-}$ are bonded, sharing three of their four oxygen atoms with other neighbours forming layers of infinite extension and formula $Si_2O_5^{2-}$, that constitute the basic unit of phyllosilicates. Tetrahedral silicon may be partly substituted by $Al^{3+}$ or $Fe^{3+}$. These tetrahedral layers are bonded to other octahedral layers of gibbsite or brucite. The bond plane between both layers is formed by apical oxygen atoms not shared by the $SiO_4^{4-}$ tetrahedra and by $OH^-$ groups of the octahedral layer.

A similar bond may occur on the opposite surface of the octahedral layer. Thus, phyllosilicates may be formed either by two layers, tetrahedral layer plus octahedral layer, then called phyllosilicates 1:1, or else by three layers, one octahedral layer and two tetrahedral layers, then called phyllosilicates 2:1. The unit formed by the bond of these two or three layers is called sheet. If all the octahedral holes are filled, the sheet is called trioctahedral. If only two-third of said positions are filled and the rest is empty, it is called dioctahedral.

The group of serpentines-candites are phyllosilicates 1:1. 2:1 phyllosilicates comprise talc-pyrophyllite, smectite, vermiculite, illite, mica and chlorite groups.

Minerals of the hormite group, formed by minerals of the palygorskite-sepiolite family are also comprised in the term clays. Unlike the rest of phyllosilicates, which are laminar, they have a fibrous habit, since the basal layer of oxygen atoms is continuous, but the apical oxygen atoms undergo a periodic reversal every six tetrahedra (sepiolite) or every four tetrahedra (palygorskite). This reversal causes the formation of channels wherein large-sized molecules may be lodged.

In order to obtain the composition object of the invention, extraction of a clayish rock that has a mineralogical composition containing between 5 and 40% dolomite and between 45 and 95% clay is extracted from a deposit. Said clays are a mixture of smectites (between 5 and 40%), illite (between 0 and 30%) and sepiolite (between 5 and 70%). Percentages always refer to the total of the composition. Said clayish rock is extracted from the deposit with a moisture higher than 30%. Then, the rock is subjected to collecting, grinding, drying and granulating and in these processes it is possible to use any of the systems normally used in the industry.

The composition object of the invention is in the form of a granular porous product with a grain size smaller than 5 mm, preferably smaller than 0.6 mm, preferably smaller than 150 $\mu$m, preferably smaller than 10 $\mu$m.

Different processes for modifying clays such as calcination, acid activation or adding organic reagents have been commented on above.

In accordance with the above, the present invention is a composition like the one defined above modified by a heat treatment. Said heat treatment process is carried out at a temperature between 20 and 1,200°C for a period of time between 10 seconds and 24 hours. After heat treatment, the composition may be subjected to a granulating process until the above-cited desired grain size is obtained.

Likewise, the present invention is also a composition made of a mixture of dolomite and clay like the above-defined one modified by a treating process with organic and/or inorganic chemicals. Particularly, said modification is carried out by treating the composition with organic and/or inorganic acids and salts thereof.

Another object of the invention is the use of the compositions described in treating and purifying waste water by physicochemical treatments in particular processes of mixed process of neutralization, precipitation, flocculation, coagulation and decoloration. The amount of the composition object of the invention to be used is between 0.02% and 50%, preferably between 0.05% and 20%, preferably between 0.1% and 10%, always of dry matter with respect to a liter of waste water to be treated. The suitable dose will depend on the nature of the waste water to be treated.

A specific aspect of the invention indicates the use of the described composition as a coagulant, in combination of flocculating agents. There are numerous commercial products used as flocculants. The use of the composition together with flocculants of the polyacrylamide family has proven to be particularly useful. Advantageously, the nature of the described composition causes its use not to increase the values of conductivity of the water to be treated, some that is caused by polyelectrolytes which are normally used as coagulants.

Another object of the invention is the use of the compositions described as an additive. In other words, their use in treating and purifying waste water by means of physicochemical treatments in particular processes or mixed processes of neutralization, precipitation, flocculation, coagulation and decoloration in addition to other neutralizing agents, pH correctors, precipitants, flocculants, coagulants and decoloring agents. The amount of the composition object of the invention to be used is between 0.02% and 50%, preferably between 0.05% and 20%, preferably between 0.1% and 10%, always of dry matter with respect to a liter of waste water to be treated. The suitable dose will depend on the nature of the waste water to be treated. The presence of the compositions described in the present invention can cause the following effects, either individually, or else in a combined manner:

- a greater reduction of the concentration of the organic and/or inorganic pollutants present in the waste water to be treated.
- a smaller volume of decanted sludge. This reduction of volume reaches 30% as a typical value. Reductions in the volume of sludge up to 70% have been observed. Additionally, this sludge has a higher concentration of dry mass.
- an improvement of turbidity of the sample, shown in the smaller values of suspended solids.
- a better decoloration of the wastes

Additionally, another object of the invention is the use of the compositions described in treating and purifying waste water by means of aerobic biological treatments.

Likewise, the use of the compositions described in the aerobic biologicaly purifying operations in combination with pH correcting agents, flocculants, coagulants, decoloring agents and mixtures thereof is considered an object of the invention. The composition may be present in any of the possible phases that the aerobic biological process comprises, wherein the bacteria responsible for the purifying activity of the process are present. The composition may be used in fixed bed systems as well as fluid bed systems.

For use thereof in fluid bed systems, the composition may be added either in its solid form or in the suspended form. Said suspension may be obtained by mixing the composition object of the invention with water or the waste to be treated. The amount of the composition to be used is between 0.001% and 50%, preferably between 0.001% and 20%, preferably between 0.001% and 10%, and more preferably between 0.001% and 1%, always of dry matter with respect to a liter of waste water to be treated. Adding the composition object of the invention causes the increase of the number of microorganisms responsible for purifying present in the biological reactor. Additionally, a higher production of biological sludge is not observed. On the contrary, reductions in the volume of sludge and a better decantability have been observed. These remarks describe the composition object of the invention as a biological activator effective in aerobic purifying processes, increasing the purifying capacity of existing biological reactors. Use thereof also permits aerobic biological reactors of a smaller volume to be designed. These reactors maintain their purifying capacity and do not cause a larger volume of excess sludge that should be treated later on.

## EMBODIMENTS OF THE INVENTION

The evaluation of the usefulness of the composition object of the invention for purifying waste water polluted by the presence of organic and/or inorganic pollutants was carried out by a comparative analysis of parameters well known in the industry that characterize the quality of purification of waste water:

* pH
* Chemical Oxygen Demand (COD; mg/l)
* Biological Oxygen Demand (BOD; mg/l)
* Total Kjeldahl Nitrogen (TKN; mg/l)
* Conductivity ($\mu$S/cm)
* Turbidity (NTU)
* Suspended solids (SS; mg/l)
* Oils and fats (mg/l)
* $V_{30}$

Additionally, in the cases of biological purification, the parameters that characterize said processes were considered:

* Suspended solids of the biological reactor (SSLM; mg/l)
* Volatile suspended solids of the biological reactor (SSVLM; mg/l). It determines the concentration of microorganisms inside the biological reactor
* Mass load ($C_m$; kg COD/kg SSVLM x day). It marks the ratio existing between the feed into the biological reactor and the microorganisms existing therein and it is defined by the following formula:

$$C_m = \frac{COD_e \ x \ Q_e}{SSVLM \ x \ V_r}$$

wherein $COD_e$ is the COD when entering the reactor, $Q_e$ is the entering flow and $V_r$ is the volume of the biological reactor.

The present invention is illustrated by means of the following Examples, that should not be considered at all restrictive of the scope hereof.

## EXAMPLE 1

Example 1 illustrates the use of the composition object of the invention as an additive in physicochemical treatment for purifying waste water coming from the cardboard making industry. The sample of waste was subjected to two treatments selected following the Jar-Test methodology. The first one corresponds to treatment with standard coagulants and flocculants. The second one includes the adding of the composition object of the invention (CD) as an additive to this same treatment. Table 1 shows the amounts of products used, as well as a comparison between the untreated sample and the two treatments carried out. The amount of water used in each treatment was 200 ml.

**TABLE 1**

|  | Untreated | Treatment 1 | Treatment 2 |
|---|---|---|---|
| Al polychloride | - | 1000 ppm | 1000 ppm |
| Lime | - | 500 ppm | 500 ppm |
| Polyacrylamide | - | 4 ppm | 4 ppm |
| CD | - | - | 12000 ppm |
| pH | 6.9 | 8.60 | 8.60 |
| COD (mg/l) | 12680 | 574 | 490 |
| SS (mg/l) | 7880 | 68 | 25 |
| Turbidity (NTU) | - | 5.00 | 9.00 |
| Conductivity ($\mu$S/cm) | - | 3160 | 3220 |
| $V_{30}$ (ml) |  | 91 | 68 |

This example shows that the use of the composition object of the invention makes it possible to obtain a volume of 30% sludge, showing its effectiveness as an additive, without worsening the analytical values.

## EXAMPLE 2

Example 2 illustrates the use of the composition object of the invention as a coagulant in a physicochemical treatment for purifying waste water coming from the textile industry. The sample of waste water was subjected to two treatments selected following the Jar-Test methodology. The first one corresponds to treatment with standard coagulants and flocculants. The second one includes the adding of the composition object of the invention (CD) as a coagulant to this same treatment and use of the same flocculant. Table 2 shows the amounts of products used, as well as a comparison between the untreated sample and the two treatments carried out. The amount of water used in each treatment was 200 ml.

**TABLE 2**

|  | Untreated | Treatment 1 | Treatment 2 |
|---|---|---|---|
| Ferrous sulfate | - | 1000 ppm | - |
| Lime | - | 400 ppm | - |
| Polyacrylamide | - | 60 ppm | 40 ppm |
| CD | - | - | 8000 ppm |

(continued)

|  | Untreated | Treatment 1 | Treatment 2 |
|---|---|---|---|
| pH | 9.0 | 7.5 | 8.0 |
| COD (mg/l) | 624 | 464 | 468 |
| SS (mg/l) | 786 | 46 | 38 |
| Turbidity (NTU) | - | 44.00 | 4.00 |
| Conductivity ($\mu$S/cm) | 2130 | 2810 | 2170 |
| $V_{30}$ (ml) | - | 28 | 10 |

This example shows that it is possible to obtain purification identical to that obtained for standard products. The composition object of the invention substitutes two reagents (ferrous sulfate and lime) and also requires a smaller amount of flocculant (polyacrylamide). As the most differentiating data, it is seen how treatment 2 produces a 64% lower volume of sludge.

## EXAMPLE 3

Example 3 illustrates the use of the composition object of the invention as an additive in a physicochemical treatment for purifying waste water coming from the textile industry. The sample of waste water was subjected to two treatments selected following the Jar-Test methodology. The first one corresponds to treatment with standard coagulants and flocculants. The second one includes the adding of the composition object of the invention (CD) as an additive to this same treatment. Table 3 shows the amounts of products used, as well as a comparison between the untreated sample and the two treatments carried out. The amount of water used in each treatment was 300 ml.

**TABLE 3**

|  | Untreated | Treatment 1 | Treatment 2 |
|---|---|---|---|
| Al polychloride | - | 333 ppm | 333 ppm |
| NaOH | - | 250 ppm | 250 ppm |
| Polyacrylamide | - | 10 ppm | 16 ppm |
| CD | - | - | 4000 ppm |
| pH | 6.7 | 7.26 | 7.77 |
| COD (mg/l) | 444 | 216 | 146 |
| SS (mg/l) | 120 | 10 | 13 |
| Turbidity (NTU) | 52.4 | 52.40 | 45.00 |
| Conductivity ($\mu$S/cm) | 2250 | 2580 | 2560 |
| $V_{30}$ (ml) |  | Not decanted | 15 |

This example shows that the adding of the composition object of the invention as an additive in a dose of 0.4% makes it possible to increase the elimination of COD from 51% to 67%. Besides, it is also possible that the sludge obtained in the process is easily decantable, with respect to floatable sludge that is obtained when the composition object of the invention is not included in the treatment.

## EXAMPLE 4

Example 4 illustrates the use of the composition object of the invention as an additive in a physicochemical treatment for purifying waste water coming from the dairy industry. The sample of waste water was subjected to two treatments selected following the Jar-Test methodology. The first one corresponds to treatment with standard coagulants and flocculants. The second one includes the adding of the composition object of the invention (CD) as an additive to this same treatment. Table 4 shows the amounts of products used, as well as a comparison between the untreated sample and the two treatments carried out. The amount of water used in each treatment was 200 ml.

### TABLE 4

|  | Untreated | Treatment 1 | Treatment 2 |
|---|---|---|---|
| $FeCl_3$ | - | 1000 ppm | 1000 ppm |
| NaOH | - | 450 ppm | 450 ppm |
| Polyacrylamide | - | 20 ppm | 20 ppm |
| CD | - | - | 10000 ppm |
| pH | 5.9 | 6.0 | 7.77 |
| COD (mg/l) | 7175 | 1932 | 2010 |
| SS (mg/l) | 1130 | 11 | 9 |
| Turbidity (NTU) | - | 18.04 | 31.62 |
| Conductivity ($\mu$S/cm) | 2450 | 3020 | 3080 |
| $V_{30}$ (ml) |  | 68 | 28 |

Once again with this sample, the usefulness of the composition object of the invention as an additive has been demonstrated. Treatment 2 maintains the purifying parameters obtained, but permits the reduction of volume of sludge obtained to 59%.

### EXAMPLE 5

Example 5 illustrates the use of the composition object of the invention in an aerobic biological purifying process of waste water coming from the meat packing industry.

A pilot test was carried out using SBR (Sequencing Batch Reactor) technology. This technology has been chosen upon considering that the results obtained in the pilot test are more easily extrapolated to an industrial plant. Likewise, all the results obtained in this technology can be then extrapolated to conventional treatments with clarification by decantation.

Two pilot reactors were prepared. The first one of them (Reactor 1) was used as a standard test. The second reactor (Reactor 2) was used for adding every day a composition in accordance with the invention. Each one of them works with an aerated homogenization bed with one day of hydraulic retention time.

The waste water studied came from a slaughterhouse. Samples were obtained from the plant three times a week. The COD values of the waste varied a lot due to the different natures of the animals slaughtered. The value thereof varied between 1800 and 20000 mg/l

In order to put both reactors into operation, they were inoculated with biomass coming from a city waste water purifier. This type of biomass was chosen due to the biological and proximity criteria. Said sludge has some values of SSLM and SSLVM of 2400 mg/l and 2040 mg/l, respectively. The starting mass load of both reactors was 0.25 kg COD/kg SSVLM.

After one month, the values of SSLM (3500 mg/l) and SSVLM (2800 mg/l) of both reactors show that city biological sludge has adapted to the waste to be treated. As of this moment, a composition in accordance with the invention was begun to be added directly into Reactor 2 in a dose of 2 g/l.

The analytical results of the waste purified by both reactors reflect hardly no differences between them. Adding the composition object of the invention does not influence the pH values (which are maintained at an optimum operating range), nor the conductivity. Elimination of COD in both reactors is in the neighborhood of 96%, with values at many moments, less than 100 mg/l. Something similar may be said about the concentration of oils and fats or about the TKN. Both reactors achieve degrees of purification with effluents that comply more than enough with the strictest legislations in this respect.

The most significant difference between both reactors results from the SSLM, SSVLM and $C_m$ values. Table 5 shows the ranges for these parameters in both reactors during a pilot test period.

### TABLE 5

|  | Reactor 1 | Reactor 2 |
|---|---|---|
| SSLM (mg/l) | 3500-5000 | 8000-10000 |

(continued)

|  | Reactor 1 | Reactor 2 |
|---|---|---|
| SSVLM (mg/l) | 3000-4500 | 5000-8000 |
| $C_m$ (kgCOD/kg SSVLM x day) | 0.20 | 0.11 |

The big difference in the SSLM values is affected by the inorganic nature of the composition object of the invention, which is added to Reactor 2 in a dose of 2 g/l. The comparison between SSVLM marks the difference between the concentrations of solids that really take part in the purification process of the treated waste. The concentration in Reactor 2, to which the composition object of the invention is added, is from 1.6 to 1.8 times higher than that in Reactor 1.

As it has been commented on, Reactor 1 is capable of producing perfect purification of the treated waste, indicating that the $C_m$ value of 0.20 kg COD/kg SSVLM x day is suitable. Logically, Reactor 2, to which the composition object of the invention is added, could purify the treated waste if it the same $C_m$ waste value were used. Bearing the definition of $C_m$ in mind, and considering the SSVLM value in Reactor 2, it is shown that adding the object of the invention to an aerobic biological reactor, permits either larger polluting loads to be adequately purified, or new reactors with a smaller volume to be designed. Specifically, if we were to design Reactor 2 so that it operate with a mass load of 0.2 kg COD/kg SSVLM, we would obtain a volume in Reactor 2 40% smaller than the volume in Reactor 1.

Furthermore, the design would be supported by the different behavior observed in both reactors in the decantation of the sludge produced. The volume taken up by said dluge in Reactor 2 is approximately 40% less than the sludge obtained in Reactor 1. Use of a composition in accordance with the invention would permit a reactor with a smaller volume to be designed without this producing a larger amount of excess biological sludge. The same purification capacity of the treated waste would be maintained.

**Claims**

1. A composition for treating and purifying waste water, which consists of porous granules with a grain size smaller than 5 mm of a natural mixture of dolomite and clays,
   **characterized in that** said clays are a mixture of smectites, illite and sepiolite, in the following percentages:

   |  | % (w/w) |
   |---|---|
   | - smectites: | 5-40 |
   | - illite: | 0-30 |
   | - sepiolite: | 5-70 |

   with respect to the total weight of the composition, wherein the composition is heat treated at a temperature between 20 and 1,200°C for a period of time between 10 seconds and 24 hours and/or chemical treated with an organic and/or inorganic acid or a salt thereof.

2. A composition, according to claim 1, **characterized in that** the formula of said natural mixture is the following:

   |  | % (w/w) |
   |---|---|
   | - dolomite : | 5-40 |
   | - clay: | 45-95 |

   with respect to the total weight of the composition.

3. A composition, according to claim 1, **characterized in that** said smectite is selected from among the group comprised of montmorillonite, beidellite, hectorite, nontronite, saponite, sauconite, stevensite and mixtures thereof.

4. A method for producing the composition of claim 1 comprising the steps:

   extracting a natural clayish mixture from a deposit, said natural clayish mixture being of dolomite and clays **characterized in that** said clays consist of a mixture of smectites, illite and sepiolite, in the following percentages:

|  | % (w/w) |
| --- | --- |
| - smectites: | 5-40 |
| - illite: | 0-30 |
| - sepiolite: | 5-70 |

with respect to the total weight of the composition grinding
drying; and
granulating said mixture, wherein in a further step the composition undergoes heat treatment at a temperature between 20 and 1,200°C for a period of time between 10 seconds and 24 hours or the composition undergoes chemical treatment with an organic and/or inorganic acid or a salt thereof.

5. Use of a composition according to any one of claims 1 to 3 for treating and purifying waste water polluted by the presence of organic and/or inorganic pollutants by means of physicochemical methods in particular or mixed processes of neutralization, precipitation, flocculation, coagulation and decoloration.

6. Use of a composition, according to claim 5, **characterized in that** it is a coagulation-flocculation process.

7. Use of a composition, according to claim 5, **characterized in that** a chemical agent that acts as a flocculant is used.

8. Use of a composition, according to claim 6, **characterized in that** said flocculant is a polyacrylamide.

9. Use of a composition, according to claim 5, in particular or mixed processes of neutralization, precipitation, flocculation, coagulation and decoloration in addition to other neutralizing agents, precipitants, flocculants, coagulants and decoloring agents.

10. Use of a composition, according to claim 9, **characterized in that** the composition acts as a coagulation additive.

11. Use of a composition, according to any of the preceding claims 5 to 10, **characterized in that** the amount of composition to be used is between 0.02 and 50% of dry matter with respect to one liter of the waste water to be treated.

12. Use of a composition, according to any of the claims 1 to 3 for treating and purifying waste water by biological treatments in fixed bed systems.

13. Use of a composition, according to any of the claims 1 to 3 for treating and purifying waste water by biological treatments in fluid bed systems.

14. Use of a composition, according to claim 13, **characterized in that** the treating and purifying of waste water is carried out by an anaerobic biological treatment.

15. Use of a composition, according to claim 13, **characterized in that** the treating and purifying of waste water is carried out by an aerobic biological treatment.

16. Use of a composition, according to claim 15, **characterized in that** said aerobic biological treatment is of the SBR (Sequencing Batch Reactor) type.

17. Use of a composition, according to any of the claims 13 to 16, **characterized in that** the amount of composition to be used is between 0.001 and 50% of dry matter with respect to one liter of waste water to be treated.

**Patentansprüche**

1. Eine Zusammensetzung zum Behandeln und Reinigen von Abwasser, welche aus porösem Granulat einer natürlichen Mischung aus Dolomit und Lehmen mit einer Korngröße von weniger als 5 mm besteht, **dadurch gekennzeichnet, dass** die Lehme eine Mischung aus Smektiten, Illit und Sepiolit in den folgenden Prozentsätzen sind:

%  (Gewicht/Gewicht)
- Smektiten:   5-40
- Illit:   0-30
- Sepiolit:   5-70

in Bezug auf das Gesamtgewicht der Zusammensetzung, wobei die Zusammensetzung für einen Zeitraum zwischen 10 Sekunden und 24 Stunden bei einer Temperatur zwischen 20° und 1200°C wärmebehandelt wird, und/oder mit einer organischen und/oder anorganischen Säure oder einem Salz derselben chemisch behandelt wird.

2. Eine Zusammensetzung gemäß Anspruch 1, **dadurch gekennzeichnet, dass** die Formel der natürlichen Mischung die Folgende ist:

%  (Gewicht/Gewicht)
- Dolomit:   5-40
- Lehm:   45-95

in Bezug auf das Gesamtgewicht der Zusammensetzung.

3. Eine Zusammensetzung gemäß Anspruch 1, **dadurch gekennzeichnet, dass** besagter Smektit ausgewählt ist aus der Gruppe umfassend Montmorillonit, Beidellit, Hectorit, Nontronit, Saponit, Sauconit, Stevensit, und Mischungen davon.

4. Ein Verfahren zur Herstellung der Zusammensetzung gemäß Anspruch 1, umfassend die Schritte:

Extrahieren einer natürlichen lehmhaltigen Mischung aus einer Ablagerung, wobei besagte natürliche lehmhaltige Mischung aus Dolomit und Lehmen besteht, und **dadurch gekennzeichnet ist, dass** besagte Lehme aus einer Mischung aus Smektiten, Illit und Sepiolit bestehen, mit den folgenden Prozentsätzen:

%  (Gewicht/Gewicht)
- Smektiten:   5-40
- Illit:   0-30
- Sepiolit:   5-70

in Bezug auf das Gesamtgewicht der Mischung;
Zermahlen;
Trocknen; und
Granulieren besagter Mischung, wobei in einem weiteren Schritt die Zusammensetzung für einen Zeitraum zwischen 10 Sekunden und 24 Stunden einer Wärmebehandlung bei einer Temperatur zwischen 20° und 1200°C ausgesetzt wird, oder mit einer organischen und/oder anorganischen Säure oder einem Salz derselben chemisch behandelt wird.

5. Verwendung einer Zusammensetzung gemäß einem der Ansprüche 1 bis 3 zum Behandeln und Reinigen von Abwasser, welches durch Anwesenheit von organischen und/oder anorganischen Schadstoffen verschmutzt ist, mittels physiochemischer Verfahren in Einzel- oder Mischprozessen der Neutralisierung, Ausfällung, Ausflockung, Koagulation und Entfärbung.

6. Verwendung einer Zusammensetzung gemäß Anspruch 5, **dadurch gekennzeichnet, dass** sie ein Koagulations-Ausflockungs-Prozess ist.

7. Verwendung einer Zusammensetzung gemäß Anspruch 5, **dadurch gekennzeichnet, dass** ein chemischer Wirkstoff verwendet wird, der als Ausflockungsmittel wirkt.

8. Verwendung einer Zusammensetzung gemäß Anspruch 6, **dadurch gekennzeichnet, dass** besagtes Ausflockungsmittel ein Polyacrylamid ist.

9.  Verwendung einer Zusammensetzung gemäß Anspruch 5, in Einzel- oder Mischprozessen der Neutralisierung, Ausfällung, Ausflockung, Koagulation und Entfärbung zusätzlich zu weiteren Neutralisierungsmitteln, Ausfällmitteln, Ausflockungsmitteln, Koagulationsmitteln und Entfärbungsmitteln.

10. Verwendung einer Zusammensetzung gemäß Anspruch 9, **dadurch gekennzeichnet, dass** die Zusammensetzung als Koagulationszusatz wirkt.

11. Verwendung einer Zusammensetzung gemäß einem der vorhergehenden Ansprüche 5 bis 10, **dadurch gekennzeichnet, dass** die zu verwendende Menge der Zusammensetzung zwischen 0,02 und 50% der Trockenmasse in Bezug auf einen Liter des zu behandelnden Abwassers beträgt.

12. Verwendung einer Zusammensetzung gemäß einem der Ansprüche 1 bis 3 zur Behandlung und Reinigung von Abwasser mittels biologischer Behandlungen in Festbett-Systemen.

13. Verwendung einer Zusammensetzung gemäß einem der Ansprüche 1 bis 3 zur Behandlung und Reinigung von Abwasser mittels biologischer Behandlungen in Fließbett-Systemen.

14. Verwendung einer Zusammensetzung gemäß Anspruch 13, **dadurch gekennzeichnet, dass** das Behandeln und Reinigen von Abwasser mittels einer anaeroben biologischen Behandlung ausgeführt wird.

15. Verwendung einer Zusammensetzung gemäß Anspruch 13, **dadurch gekennzeichnet, dass** das Behandeln und Reinigen von Abwasser mittels einer aeroben biologischen Behandlung ausgeführt wird.

16. Verwendung einer Zusammensetzung gemäß Anspruch 15, **dadurch gekennzeichnet, dass** besagte aerobe biologische Behandlung vom Typ SBR (Sequencing-Batch-Reactor) ist.

17. Verwendung einer Zusammensetzung gemäß einem der Ansprüche 13 bis 16, **dadurch gekennzeichnet, dass** die zu verwendende Menge des Gemisches zwischen 0,001 und 50% der Trockenmasse in Bezug auf einen Liter des zu behandelnden Abwassers beträgt.

**Revendications**

1.  Une composition destinée à traiter et à purifier les eaux usées consistant en granules poreux dont la taille de grain est inférieure à 5 mm composés d'un mélange naturel de dolomie et d'argiles,
    **caractérisée en ce que** les argiles précitées sont un mélange de smectites, illites et sépiolites, dans les proportions suivantes :

    |              | % (M/M) |
    | ------------ | ------- |
    | - smectites : | 5-40    |
    | - illite :    | 0-30    |
    | - sépiolite : | 5-70    |

    par rapport à la masse totale de la composition, la composition étant traitée par la chaleur à une température entre 20 et 1 200°C pendant une durée de 10 secondes à 24 heures et / ou traitée chimiquement avec un acide organique et / ou inorganique ou un sel de celui-ci.

2.  Une composition selon la Revendication 1 **caractérisée en ce que** la formule du mélange naturel précité est la suivante :

    |             | % (M/M) |
    | ----------- | ------- |
    | - dolomite : | 5-40    |
    | - argile :   | 45-95   |

    par rapport à la masse totale de la composition.

3. Une composition selon la Revendication 1 **caractérisée en ce que** la smectite précitée est sélectionnée dans un groupe comprenant la montmorillonite, la beidellite, l'hectorite, la nontronite, la saponite, la sauconite, la stevensite et des mélanges de ces dernières substances.

4. Un procédé pour produire la composition de la Revendication 1 comprenant les étapes :

extraire un mélange argileux naturel d'un dépôt, le mélange argileux naturel précité étant un mélange de dolomite et d'argiles
**caractérisé en ce que** les argiles précitées consistent en un mélange de smectites, d'illites et de sépiolites, dans les proportions suivantes

|  | % (M/M) |
|---|---|
| - smectites : | 5-40 |
| - illite : | 0-30 |
| - sépiolite : | 5-70 |

par rapport à la masse totale de la composition
moudre
sécher ; et
granuler le mélange précité et dans une étape suivante, soumettre le mélange à un traitement par la chaleur à une température entre 20 et 1 200°C pendant une durée de 10 secondes à 24 heures ou à un traitement chimique avec un acide organique et / ou inorganique ou un sel de celui-ci.

5. Utilisation d'une composition selon l'une quelconque des Revendications 1 à 3 pour le traitement et la purification d'eaux usées polluées par la présence de polluants organiques et/ou inorganiques par des méthodes physico-chimiques en particulier ou des processus mixtes de neutralisation, précipitation, floculation, coagulation et décoloration.

6. Utilisation d'une composition selon la Revendication 5 **caractérisée en ce qu'**il s'agit d'un processus de coagulation-floculation.

7. Utilisation d'une composition selon la Revendication 5 **caractérisée en ce qu'**un agent chimique qui agit comme floculant est utilisé.

8. Utilisation d'une composition selon la Revendication 6 **caractérisée en ce que** le floculant précité est un polyacrylamide.

9. Utilisation d'une composition selon la Revendication 5 dans des processus uniques ou mixtes de neutralisation, précipitation, floculation, coagulation et décoloration en plus d'autres agents neutralisants, précipitants, floculants, coagulants et agents décolorants.

10. Utilisation d'une composition selon la Revendication 9 **caractérisée en ce que** la composition agit comme un additif de coagulation.

11. Utilisation d'une composition selon l'une quelconque des Revendications 5 à 10 **caractérisée en ce que** la quantité de composition à utiliser se situe entre 0,02 et 50% de matière sèche pour un litre d'eaux usées à traiter.

12. Utilisation d'une composition selon l'une quelconque des Revendications 1 à 3 pour le traitement et la purification d'eaux usées par traitements biologiques dans des systèmes de lits fixes.

13. Utilisation d'une composition selon l'une quelconque des Revendications 1 à 3 pour le traitement et la purification d'eaux usées par traitements biologiques dans des systèmes de lits fluides.

14. Utilisation d'une composition selon la Revendication 13 **caractérisée en ce que** le traitement et la purification d'eaux usées sont effectués par un traitement biologique anaérobie.

15. Utilisation d'une composition selon la Revendication 13 **caractérisée en ce que** le traitement et la purification d'eaux usées sont effectués par un traitement biologique aérobie.

16. Utilisation d'une composition selon la Revendication 15 **caractérisée en ce que** le traitement biologique aérobie précité est de type SBR (Sequencing Batch Reactor).

17. Utilisation d'une composition selon l'une quelconque des Revendications 13 à 16 **caractérisée en ce que** la quantité de composition à utiliser se situe entre 0,001 et 50% de matière sèche pour un litre d'eaux usées à traiter.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4116828 A
- US 5454955 A
- WO 9610540 A
- US 5632899 A
- RU 2125022
- US 5880060 A
- EP 0901805 A1
- WO 0179120 A1
- WO 0190000 A1
- WO 0210075 A
- WO 0236497 A1
- US 20030015473 A1
- US 3935067 A
- FR 2551048 A1
- ES 2005754

- WO 9420425 A
- EP 0834473 A
- US 6503740 B
- DE 3440619
- DE 3501563
- GB 2200350 A
- DE 4132679
- AT 2396101 B
- WO 9936365 A
- WO 0005178 A
- WO 0220152 A
- DE 3728812
- US 20010025945 A
- US 20020179534 A

**Non-patent literature cited in the description**

- **Hani N. Hhoury et al.** Origin of Magnesium Clays from the Amargosa Desert, Nevada. *Clays and Minerals,* 1982, vol. 30 (5), 327-336